# EUROPÄISCHE PATENTSCHRIFT

(11) **EP 3 335 328 B1**
(45) Veröffentlichungstag und Bekanntmachung des Hinweises auf die Patenterteilung: **29.05.2019**
(21) Anmeldenummer: 16742222.9
(22) Anmeldetag: 15.07.2016
(51) Int. Cl.: H04B 7/185

(54) **VERFAHREN ZUR BIDIREKTIONALE IP KOMMUNIKATION ZWISCHEN EINEM BODENTERMINAL UND EINEM FUNKTERMINAL EINES SATELLITEN MIT ZWISCHENSCHALTUNG EINES WELTRAUMGESTÜTZTES INTERNET-SYSTEMS.**
METHOD OF BIDIRECTIONAL IP COMMUNICATION BETWEEN A TERRESTRIAL TERMINAL AND A RADIO TERMINAL OF A SATELLITE WITH INTERPOSITION OF A SPACE BASED INTERNET SYSTEM.
METHODE DE COMMUNICATION BIDIRECTIONNELLE IP ENTRE UN TERMIANL TERRESTRE ET UN TERMINAL RADIO D'UN SATELLITE AVEC INTERPOSITION D'UN SYSTEME SPATIAL BASÉ SUR INTERNET.

(30) Priorität: 10.08.2015 DE 102015010132
(43) Veröffentlichungstag der Anmeldung: 20.06.2018
(73) Patentinhaber: Airbus Defence and Space GmbH, 82024 Taufkirchen (DE)
(72) Erfinder: EICKHOFF, Jens, 88090 Immenstaad (DE)
(74) Vertreter: Frenkel, Matthias Alexander
(86) Internationale Anmeldenummer: PCT/EP2016/066914
(87) Internationale Veröffentlichungsnummer: WO 2017/025274

(56) Entgegenhaltungen:
- EP-A1- 2 717 493
- EP-A1- 2 887 564
- EP-A2- 2 541 855
- BLUMENTHAL STEVEN H: "Medium Earth Orbit Ka Band Satellite Communications System", MILCOM 2013 - 2013 IEEE MILITARY COMMUNICATIONS CONFERENCE, IEEE, 18. November 2013 (2013-11-18), Seiten 273-277, XP032563539, DOI: 10.1109/MILCOM.2013.54 [gefunden am 2014-02-07]

## Beschreibung

Die Erfindung betrifft ein Verfahren zur Kommunikation zwischen einem Bodenterminal auf der Erdoberfläche und einem Satelliten sowie einen entsprechend ausgestatteten Satelliten und ein entsprechendes Funkterminal für einen solchen Satelliten.

Herkömmlicherweise kommunizieren Satelliten mit der Erdoberfläche über stationäre Bodenstationen. Dabei erfolgt der Datenaustausch zwischen dem Satellit und der stationären Bodenstation direkt über Funk. Dies hat den Nachteil, dass nur bei Sichtkontakt zwischen Satellit und Bodenstation eine Kommunikation möglich ist. Der Datenaustausch ist somit komplex und für den Zeitraum zwischen Bodenstationskontakten (bei klassischen Erdbeobachtungssatelliten typischerweise mehrere Orbits und mehrere Stunden) muss mit Timelines gearbeitet werden, über welche vorab Zeitpunkte für Beobachtungsoperationen des Satelliten und für den Datenaustausch mit dem Boden festgelegt werden. Ein interaktiver Betrieb von Satellit und Nutzlast ist nur für die kurze Zeitspanne des Bodenstationsüberflugs (typischerweise max. 8 Minuten) möglich. Für den reinen Transfer von Satellitennutzdaten werden teilweise auch Relaissatelliten verwendet. Über diese erfolgt aber keine Satellitensteuerung und auch diese bieten keine permanente Erreichbarkeit eines Satelliten.

Aus dem Stand der Technik sind weiterhin sog. weltraumgestützte Internet-Systeme bekannt, welche eine IP-basierte Kommunikation unter Zwischenschaltung einer Funkübertragung über Satelliten ermöglichen. Beispiele von solchen weltraumgestützten Internet-Systemen sind die in Planung befindlichen Systeme OneWeb und O3B. Weltraumgestützte Internet-Systeme verwenden eine große Anzahl von Satelliten mit darauf befindlichen Funkterminals. Diese Terminals ermöglichen es, in festgelegten Frequenzbändern über IP-basierte Protokolle Daten zu übertragen. Über die Satelliten des weltraumgestützten Internet-Systems werden Internetanfragen von einem Punkt der Erdoberfläche an andere Punkte weitergeleitet, welche die Anfragen wiederum unter Zwischenschaltung der Satelliten des weltraumgestützten Internet-Systems beantworten können. Ein Teil der Strecke der Internet-Kommunikation findet somit über das weltraumgestützte System statt.

Weltraumgestützte Internet-Systeme ermöglichen eine Kommunikation über Internet in unzugänglichen Gebieten, wie auf hoher See, in Urwaldregionen oder in Polarregionen. Hierzu wird in diesen Regionen am Boden bzw. auf einem Schiff ein Internetterminal aufgestellt, welches über Funk mit den Satelliten des weltraumgestützten Internet-Systems kommuniziert. Das weltraumgestützte Internet-System stellt also eine permanente, bidirektionale und interaktive Kommunikationsbrücke dar, und zwar zwischen dem entlegenen Internetterminal und einer Hauptstelle, wie beispielsweise einem Forschungsinstitut, einer Behörde oder einem Logistikunternehmen.

Siehe auch EP 2717493 (The Boing Company).

Aufgabe der Erfindung ist es, eine verbesserte Kommunikation zwischen einem Bodenterminal auf der Erdoberfläche und einem Satelliten bereitzustellen.

Diese Aufgabe wird durch das Verfahren gemäß Patentanspruch 1 bzw. den Satelliten gemäß Patentanspruch 11 bzw. das Funkterminal gemäß Patentanspruch 12 gelöst. Weiterbildungen der Erfindung sind in den abhängigen Ansprüchen definiert.

Das erfindungsgemäße Verfahren dient zur Kommunikation zwischen einem Bodenterminal auf der Erdoberfläche und einem Satelliten. Das Bodenterminal ist zur IP-basierten Kommunikation eingerichtet. Ebenso ist ein auf dem Satelliten befindliches Funkterminal zur IP-basierten Kommunikation eingerichtet. Hier und im Folgenden ist unter IP-basierter Kommunikation ein Datenaustausch basierend auf dem IP-Protokoll (IP = Internet Protocol) und gegebenenfalls auch Protokollen zu verstehen, die gemäß dem OSI-Referenzmodell in höheren Schichten oberhalb des IP-Protokolls liegen. Solche Protokolle umfassen u.a. TCP (TCP = Transmission Control Protocol), UDP (UDP = User Datagram Protocol), HTTP(S) (HTTP = Hypertext Transfer Protocol (Secure)) und FTP (FTP = File Transfer Protocol). Um die IP-basierte Kommunikation zu ermöglichen, ist/sind dem Funkterminal auf dem Satelliten eine (oder mehrere) IP-Adresse(n) zugewiesen.

Die Flughöhe des im erfindungsgemäßen Verfahren verwendeten Satelliten kann verschieden festgelegt sein und liegt vorzugsweise unterhalb der Flughöhe der Satelliten des weltraumgestützten Internet-Systems. Bevorzugte Flughöhen des Satelliten liegen zwischen 350 km und 15000 km, vorzugsweise zwischen 350 km und 1500 km und besonders bevorzugt zwischen 500 km und 1000 km oberhalb der Erdoberfläche. Diese Flughöhenbereiche umfassen die Flughöhen von herkömmlichen Erderkundungssatelliten. Die genannten Flughöhenbereiche umfassen ferner Flughöhen, die sich zur Verwendung des Verfahrens mit dem weltraumgestützten Internet-System OneWeb eignen, dessen Satelliten in einer Höhe von etwa 1200 km fliegen sollen. Ebenso umfassen die genannten Bereiche Flughöhen, für die das weltraumgestützte Internet-System O3B eingesetzt werden kann, bei dem die Flughöhen der Satelliten bei etwa 8000 km liegen.

Damit haben das Funkterminal (Internetterminal im Satelliten) und, wie später erläutert, daran angeschlossene Module des Satelliten über das weltraumgestützte Internet-System permanenten, bidirektionalen und interaktiven Internet-Kontakt zur steuernden Hauptstelle. Letztere kann beispielsweise ein Forschungsinstitut, eine Behörde oder ein Logistikunternehmen sein.

Erfindungsgemäß läuft die Kommunikation derart ab, dass über ein oder mehrere IP-basierte Protokolle unter Zwischenschaltung eines weltraumgestützten Internet-Systems die nachfolgend erläuterten Informationen ausgetauscht werden: Unter den Begriff der IP-basierten Protokolle fallen die oben genannten Protokolle, nämlich das IP-Protokoll und ggf. auch Protokolle auf höheren Schichten. Als weltraumgestütztes Internet-System kann z.B. das eingangs erwähnte System OneWeb oder O3B zum Einsatz kommen. Aber auch beliebige andere weltraumgestützte Internet-Systeme können im erfindungsgemäßen Verfahren verwendet werden. Für die Funkübertragung zwischen Bodenterminal, dem weltraumgestützten Internet-System und dem Satelliten können die Internet-Protokollpakete zusätzlich in Fehlerkorrekturprotokolle wie LTE (Long Term Evolution) oder CCSDS (Consultative Committee for Space Data Systems) verpackt werden. Dies erfolgt nach Maßgabe der verwendeten Technik des weltraumgestützten Internet-Systems und ist für die Erfindung unerheblich.

Erfindungsgemäß werden Steuerkommandos für ein oder mehrere Module des Satelliten von dem Bodenterminal an das Funkterminal übermittelt, wobei das Funkterminal die Steuerkommandos über Funk von dem weltraumgestützten Internet-System empfängt und an das oder die im Satelliten mit dem Funkterminal gekoppelten Module weiterleitet. Bevorzugt erhält dazu jedes angesteuerte Modul eine eigene IP Adresse im Satelliten. Alternativ oder zusätzlich werden Moduldaten, welche von einem oder mehreren Modulen des Satelliten stammen, von dem Funkterminal an das Bodenterminal übermittelt. Hierbei sendet das Funkterminal die Moduldaten über Funk an das weltraumgestützte Internet-System aus.

Das erfindungsgemäße Verfahren weist den Vorteil auf, dass über eine IP-basierte Datenübertragung unter Zwischenschaltung eines weltraumgestützten Internet-Systems ein sehr zuverlässiger Datenaustausch zwischen dem Bodenterminal und dem Satelliten unabhängig von der Orbitposition des Satelliten gewährleistet wird. Insbesondere ist kein Sichtkontakt zwischen dem Bodenterminal und dem Satelliten zum Datenaustausch erforderlich, wie dies im Stand der Technik der Fall ist. Auch ist volle Bidirektionalität (also Steuerung und Ergebnisrückmeldung) gewährleistet, im Gegensatz zu reinen Nutzdatentransfers zum Boden über Relaissatelliten, wie sie heute auch schon teilweise zur Anwendung kommen. Die Kommunikation inklusive Ergebnisrückmeldung kann somit fast ohne Zeitverzögerung erfolgen, was den Abruf von Moduldaten vom Satelliten bzw. die Übermittlung von Steuerkommandos an den Satelliten deutlich erleichtert.

In einer besonders bevorzugten Ausführungsform werden Steuerkommandos für zumindest eine Nutzlast des Satelliten von dem Bodenterminal an das Funkterminal übermittelt. Die Nutzlast ist im Bereich der Satellitentechnik ein stehender Begriff. Unter Nutzlast sind die Instrumente des Satelliten entsprechend seinem Verwendungszweck zu verstehen. Eine Nutzlast stellt ein Modul des Satelliten dar. Alternativ oder zusätzlich können auch Moduldaten, welche von zumindest einer Nutzlast des Satelliten stammen, von dem Bodenterminal an das Funkterminal übertragen werden.

In einer bevorzugten Ausführungsform umfasst die zumindest eine Nutzlast eine Einrichtung zur Erfassung von Signalen von der Erdoberfläche, insbesondere ein Radarsystem und/oder ein Kamerasystem. Es sind jedoch auch beliebige andere Nutzlasten für einen Satelliten denkbar.

In einer weiteren Variante des erfindungsgemäßen Verfahrens werden Steuerkommandos für die Plattform des Satelliten von dem Bodenterminal an das Funkterminal im Satelliten übertragen. Vorzugsweise leitet das Funkterminal die Steuerkommandos für die Plattform an einen zentralen Rechner zur Plattformsteuerung weiter, der diese Steuerkommandos dann verarbeitet. In einer weiteren Variante empfängt das Funkterminal die Moduldaten, welche vom Plattformrechner des Satelliten stammen, von diesem zentralen Rechner und sendet diese anschließend über Funk aus. Analog zur Nutzlast ist auch die Plattform ein stehender Begriff auf dem Gebiet der Satellitentechnik. Die Plattform ist ein Modul im Sinne der Patentansprüche und stellt im Wesentlichen die Versorgungseinheit des Satelliten dar, die den Betrieb der Nutzlast oder der Nutzlasten ermöglicht.

In einer bevorzugten Ausführungsform betreffen die Moduldaten, welche im Rahmen des erfindungsgemäßen Verfahrens übertragen werden, Betriebsdaten und/oder Messdaten des oder der Module des Satelliten. Betriebsdaten sind dabei Größen, welche den Betrieb des entsprechenden Moduls selbst betreffen. Messdaten sind demgegenüber externe Größen, die nicht unmittelbar mit dem Betrieb des Moduls im Zusammenhang stehen. Ist das Modul beispielsweise eine Nutzlast in der Form eines Kamerasystems, stellen die Messdaten die von dem Kamerasystem erfassten Bilder dar.

In einer weiteren bevorzugten Ausführungsform wird in dem Bodenterminal eine Benutzerschnittstelle bereitgestellt, über die ein Benutzer die Übermittlung der Steuerkommandos und/oder die Übermittlung der Moduldaten veranlassen kann. Auf diese Weise wird eine interaktive Kommunikation zwischen einem Benutzer im Bodenterminal und dem Satelliten ermöglicht. Die Benutzerschnittstelle umfasst vorzugsweise einen Webbrowser, über den das Funkterminal des Satelliten mittels seiner IP-Adresse adressierbar ist.

In einer weiteren bevorzugten Variante der Erfindung werden im Falle einer Unterbrechung der Kommunikation zwischen Funkterminal und Bodenterminal zu übermittelnden Steuerkommandos im Bodenterminal gepuffert. Alternativ oder zusätzlich werden zu übermittelnde Moduldaten im Satelliten gepuffert. Die gepufferten Steuerkommandos bzw. Moduldaten werden dann nach der Beendigung der Unterbrechung ausgesendet. Mit dieser Variante können Unterbrechungen in der Funkkommunikation zwischen dem Funkterminal und dem weltraumgestützten Internet-System überbrückt werden.

Zur Erhöhung der Sicherheit des Verfahrens wird in einer bevorzugten Variante die Kommunikation zwischen Bodenterminal und Satelliten verschlüsselt, z.B. unter Verwendung klassischer Internetverschlüsselungstechniken, wie VPN (Virtual Private Network).

Neben dem oben beschriebenen Verfahren betrifft die Erfindung einen Satelliten zur Verwendung in diesem Verfahren bzw. einer oder mehreren bevorzugte Varianten des Verfahrens. Der Satellit umfasst ein Funkterminal, das zur IP-basierten Kommunikation eingerichtet ist und dazu konfiguriert ist, über ein oder mehrere IP-basierte Protokolle Steuerkommandos für ein oder mehrere Module des Satelliten, die von einem zur IP-basierten Kommunikation eingerichteten Bodenterminal stammen, über Funk von einem weltraumgestützten Internet-System zu empfangen und an das oder die Module weiterzuleiten. Alternativ oder zusätzlich ist das Funkterminal dazu konfiguriert, über ein oder mehrere IP-basierte Protokolle Moduldaten, welche von einem oder mehreren Modulen des Satelliten stammen und an das Bodenterminal adressiert sind, über Funk an das weltraumgestützte Internet-System auszusenden.

Neben dem oben beschriebenen Verfahren und dem Satelliten betrifft die Erfindung das spezielle Funkterminal für den Satelliten. Dieses Funkterminal ist zur IP-basierten Kommunikation eingerichtet und dazu konfiguriert, über ein oder mehrere IP-basierte Protokolle - ggf. zusätzlich verpackt in Funkprotokolle wie CCSDS oder LTE - Steuerkommandos für ein oder mehrere Module des Satelliten, die von einem zur IP-basierten Kommunikation eingerichteten Bodenterminal stammen, über Funk von einem weltraumgestützten Internet-System zu empfangen und an das oder die Module weiterzuleiten. Alternativ oder zusätzlich ist das Funkterminal dazu konfiguriert, über ein oder mehrere IP-basierte Protokolle Moduldaten, welche von einem oder mehreren Modulen des Satelliten stammen und an das Bodenterminal adressiert sind, über Funk an das weltraumgestützte Internet-System auszusenden. Um die IP-basierte Kommunikation zu ermöglichen, besitzt das Funkterminal zumindest eine IP-Adresse, vorzugsweise eine IP-Adresse für jedes Modul im Satelliten. Insbesondere kann das Funkmodul Daten von der Bodenstation an die Module entsprechend ihrer IP-Adressen verteilen sowie Daten von den Modulen entsprechend ihrer IP-Adressen entgegennehmen und an die Bodenstation zurücktransferieren.

Die Kommunikation zwischen dem Funkterminal im Satelliten und dem der IP-Adresse zugeordneten Nutzlast- oder Plattformmodul muss elektrisch/logisch nicht notwendigerweise über das im Internetbereich bekannte Ethernet übertragen werden, sondern kann auch über serielle Schnittstellen wie beispielsweise RS422, LVDS, SpaceWire oder über Datenbusse wie MIL1553 oder CAN erfolgen. Die Realisierung dieser Übertragungstechnik erfolgt nach Maßgabe der Satellitenentwickler und ist für die Erfindung unerheblich.

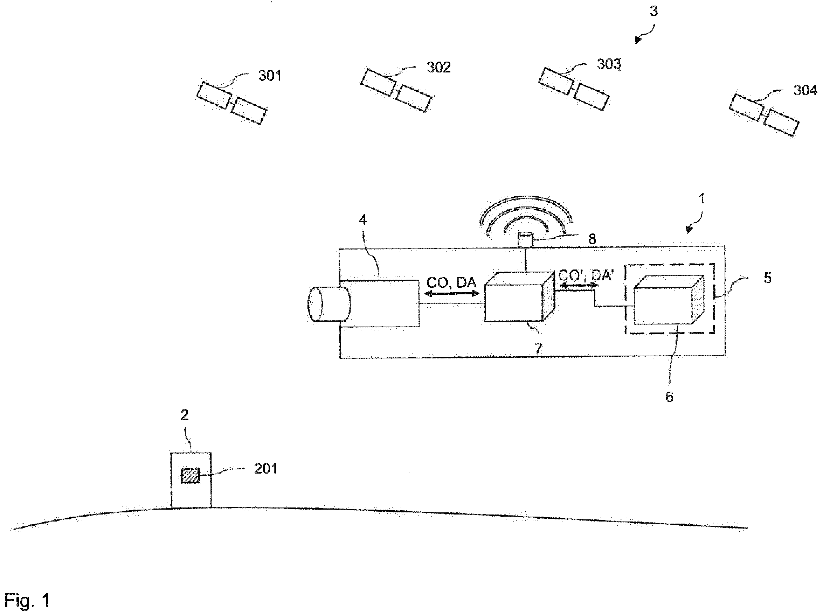

Ein Ausführungsbeispiel der Erfindung wird nachfolgend anhand der beigefügten Fig. 1 detailliert beschrieben. Diese Figur zeigt die in einer Variante des erfindungsgemäßen Verfahrens verwendeten Komponenten.

Die hier beschriebene Ausführungsform der Erfindung ermöglicht eine zuverlässige, interaktive und bidirektionale Kommunikation zwischen einem Satelliten 1 und einem Bodenterminal 2, das sich auf der Erdoberfläche befindet. Die Kommunikation ist dabei IP-basiert - auf den Funkstrecken ggf. zusätzlich in Funkprotokolle verpackt - und erfolgt unter Zwischenschaltung eines weltraumgestütztes Internet-Systems auf dem Kommunikationspfad zwischen Satellit 1 und Bodenstation 2. Wie bereits eingangs erwähnt, ist unter IP-basierter Kommunikation eine Kommunikation über das IP-Protokoll und ggf. über Protokolle auf höheren Schichten gemäß dem OSI-Referenzmodell zu verstehen. Mit anderen Worten bedeutet IP-basierte Kommunikation eine Kommunikation mit einem oder mehreren Protokollen aus der Internetprotokollfamilie.

Das weltraumgestützte Internet-System ist mit Bezugszeichen 3 angedeutet. Das System umfasst eine Vielzahl von Satelliten, wobei beispielhaft in Fig. 1 vier Satelliten 301, 302, 303 und 304 wiedergegeben sind. Als weltraumgestütztes Internet-System kann ein beliebiges, aus dem Stand der Technik bekanntes System, wie z.B. OneWeb oder O3B, eingesetzt werden. Die Flughöhe des Satelliten 1 ist dabei niedriger als die der Satelliten des Internet-Systems 3.

Um eine IP-basierte Kommunikation zu ermöglichen, kommuniziert ein auf dem Satelliten 1 vorgesehener Funkterminal 7 über Funk mittels einer Antenne 8 mit Satelliten aus dem weltraumgestützten Internet-System, die wiederum mittels einer Funkverbindung zu entsprechenden Bodenstationen mit der Internet-Infrastruktur auf der Erde verbunden sind. Die Funktionsweise des Funkterminals 7 wird weiter unten noch näher erläutert. Der Satellit 1 umfasst ferner eine Plattform 5, welche lediglich schematisch durch ein gestricheltes Rechteck angedeutet ist. Die Plattform 5 enthält einen zentralen Rechner 6, der üblicherweise als Onboardcomputer bezeichnet wird und zur Steuerung der Satelliten-Plattform dient. Darüber hinaus enthält der Satellit 1 eine Nutzlast 4, welche im hier beschriebenen Ausführungsbeispiel ein Kamerasystem zur Aufnahme von Bildern der Erdoberfläche ist. Sowohl die Plattform 5 bzw. der Rechner 6 als auch die Nutzlast 4 weisen eine Kommunikationsverbindung zu dem Funkterminal 7 auf.

Das Funkterminal 7 weist eine oder mehrere eigene IP-Adresse(n) auf und ist für eine IP-basierte Kommunikation eingerichtet. Das Terminal empfängt über Funk mittels der Antenne 8 Daten von dem Internet-System 3, die von dem Bodenterminal 2 stammen. Das Bodenterminal 2 ist dabei ebenfalls zur IP-basierten Kommunikation eingerichtet und weist hierzu auch eine IP-Adresse auf. Ferner kann das Funkterminal 7 Daten, welche an das Bodenterminal 2 adressiert sind, über Funk an das weltraumgestützte Internet-System 3 senden, welches diese Daten dann an das Bodenterminal 2 weiterleitet. Die Kommunikation über Funk verwendet ein von dem weltraumgestützten Internet-System vorgegebenes Funkprotokoll und Frequenzband.

Über die IP-basierte Kommunikation zwischen Bodenterminal 2 und Funkterminal 7, die vorzugsweise mit an sich bekannten Verfahren verschlüsselt ist, werden verschiedene Arten von Daten übermittelt. Zum einen werden Steuerkommandos CO für die Nutzlast 4 empfangen, die das Terminal 7 an die Nutzlast weiterleitet. Analog werden von der Nutzlast 4 Telemetriedaten (d.h. Betriebsdaten der Nutzlast) sowie von der Nutzlast erfasste Messdaten an das Terminal 7 übermittelt, welches diese Daten basierend auf Protokollen der Internetprotokollfamilie mittels der Antenne 8 aussendet. Die Zieladresse dieser Daten ist dabei das Bodenterminal 2. Über das weltraumgestützte Internet-System 3 gelangen diese Daten dann an das Bodenterminal. Die genannten Telemetriedaten bzw. Messdaten der Nutzlast sind in Fig. 1 als Daten DA bezeichnet.

Von dem Funkterminal 7 werden ferner Steuerkommandos CO', welche an die Plattform 5 gerichtet sind, mittels IP-basierter Kommunikation empfangen. Diese Steuerkommandos stammen wiederum von der Bodenstation 2 und werden von dem Terminal 7 an den Rechner 6 weitergeleitet, der dann die entsprechende Steuerungsaufgabe gemäß den Steuerkommandos durchführt. Ferner werden von der Plattform 5 bzw. dem Rechner 6 Telemetriedaten DA' betreffend die Plattform (d.h. Betriebsdaten der Plattform) an das Terminal 7 übermittelt, welches diese Daten unter Adressierung des Bodenterminals 2 über die Antenne 8 aussendet. Die Daten gelangen dann unter Zwischenschaltung des weltraumgestützten Internet-Systems 3 an das Bodenterminal 2. Der Datenaustausch zwischen Bodenterminal 2 und Satellit 1 erfolgt interaktiv basierend auf Bedienaktionen eines Benutzers im Bodenterminal 2. Hierfür ist im Bodenterminal eine Benutzerschnittstelle 201 vorgesehen. Diese Benutzerschnittstelle ist vorzugsweise ein Webbrowser, über den eine Kommunikation mit dem Terminal 7 über dessen IP-Adresse aufgenommen werden kann. Für interaktive Aufgaben, wie eine interaktive Steuerung von Kameras oder des Satelliten, können in der Bodenstation ggf. auch entsprechende Bedienelemente wie Joysticks und ähnliches eingesetzt werden.

Wird die Flugbahn des Satelliten 1 derart gewählt, dass er sich permanent in Funkkegeln entsprechender Satelliten des weltraumgestützten Internet-Systems befindet, wird eine ununterbrochene Kommunikation zwischen Satellit 1 und Bodenterminal 2 sichergestellt. Somit können an jeder beliebigen Orbitposition des Satelliten 1 interaktiv über die Benutzerschnittstelle 201 Steuerkommandos bzw. andere Daten mit dem Satelliten ausgetauscht werden. Insbesondere können zu jedem Zeitpunkt Telemetriedaten der Satelliten-Plattform bzw. Nutzlast-Telemetriedaten und Nutzlast-Messergebnisse abgefragt werden. In der Ausführungsform der Fig. 1 können somit zu jedem beliebigen Zeitpunkt Bilder von dem Kamerasystem 4 abgerufen werden.

Das Bodenterminal 2 kann somit die Funktion einer herkömmlichen Bodenstation übernehmen. Aufgrund der IP-basierten Kommunikation unter Zwischenschaltung des weltraumgestützten Internet-Systems ist es jedoch nicht mehr erforderlich, dass das Bodenterminal 2 Sichtkontakt zu dem Satelliten 1 haben muss, wie dies in herkömmlichen Systemen der Fall ist. Es muss folglich nicht mehr mit Timelines gearbeitet werden, über welche festgelegt wird, wann bestimmte Informationen vom Satelliten zu erfassen sind und zu welchem Zeitpunkt Informationen zwischen Bodenstation und Satelliten auszutauschen sind.

Gegebenenfalls kann die Flughöhe des Satelliten 1 auch derart festgelegt sein, dass kein unterbrechungsfreier Internet-Kontakt des Terminals 7 zu dem weltraumgestützten Internet-System 3 garantiert werden kann. Dieser Fall tritt dann auf, wenn der Satellit 1 bzw. das Terminal 7 zeitweise nicht in einem Funkkegel eines entsprechenden Satelliten des weltraumgestützten Internet-Systems liegen. In einer bevorzugten Variante sind deshalb sowohl im Bodenterminal 2 als auch im Satelliten 1 entsprechende Puffer vorgesehen, welche eine Zwischenspeicherung von Daten ermöglichen, so dass im Falle eines Kontaktabrisses zwischen dem Terminal 7 und dem weltraumgestützten Internet-System 3 keine Informationen verloren gehen. Dabei werden Steuerkommandos CO und CO', die das Bodenterminal 2 an den Satelliten 1 übermittelt möchte, im Puffer des Bodenterminals zwischengespeichert, bis wieder ein unterbrechungsfreier Kontakt hergestellt ist. In Analogie werden an das Bodenterminal zu übermittelnde Daten DA bzw. DA' in dem Puffer des Satelliten zwischengespeichert, bis wieder ein unterbrechungsfreier Internetkontakt gewährleistet ist. Der Puffer des Satelliten ist vorzugsweise in dem Terminal 7 integriert.

Die im Vorangegangenen beschriebenen Ausführungsformen der Erfindung weisen eine Reihe von Vorteilen auf. Insbesondere wird eine zuverlässige, interaktive und bidirektionale Kommunikation zwischen einem Bodenterminal und einem Satelliten durch Nutzung eines weltraumgestützten Internet-Systems gewährleistet.

Hierzu wird ein geeignetes Funkterminal zur IP-basierten Kommunikation in den Satelliten integriert. Auf diese Weise wird es ermöglicht, dass ein Satellit dauerhaft an jeder beliebigen Orbitposition durch das Bodenterminal gesteuert werden kann, bzw. Betriebsdaten und Messdaten von dem Satelliten zu jedem Zeitpunkt im Bodenterminal empfangen werden können. Basierend auf dem erfindungsgemäßen Verfahren werden somit Satelliten und deren Nutzlasten über das Internet steuerbar. Im Gegensatz zu einer klassischen Kommunikation zwischen einer stationären Bodenstation und einem Satelliten braucht die Satellitensteuerung nicht mehr auf den oben genannten Timelines zu basieren. Darüber hinaus kann die Kommunikation zwischen Bodenterminal und Satellit interaktiv mittels einer Benutzerschnittstelle in der Bodenstation erfolgen.

### Bezugszeichenliste

- 1: Satellit
- 2: Bodenstation
- 201: Benutzerschnittstelle der Bodenstation
- 3: weltraumgestütztes Internet-System
- 301, 302, 303, 304: Satelliten des weltraumgestützten Internet-Systems
- 4: Nutzlast des Satelliten
- 5: Plattform des Satelliten
- 6: zentraler Rechner
- 7: Funkterminal
- 8: Antenne
- CO: Steuerkommandos für die Nutzlast
- CO': Steuerkommandos für die Plattform
- DA: Daten von der Nutzlast
- DA': Daten von der Plattform

## Patentansprüche

1. Verfahren zur Kommunikation zwischen einem Bodenterminal (2) auf der Erdoberfläche und einem Satelliten (1), wobei das Bodenterminal (2) sowie ein Funkterminal (7) des Satelliten (1) zur IP-basierten Kommunikation eingerichtet sind und die Kommunikation derart abläuft, dass über ein oder mehrere IP-basierte Protokolle unter Zwischenschaltung eines weltraumgestützten Internet-Systems (3):
- Steuerkommandos (CO, CO') für ein oder mehrere Module (4, 5) des Satelliten (1) von dem Bodenterminal (2) an das Funkterminal (7) übermittelt werden, welches die Steuerkommandos (CO, CO') über Funk von dem weltraumgestützten Internet-System (3) empfängt und an das oder die Module (4, 5) weiterleitet, wobei jedes angesteuerte Modul (4, 5) eine eigene IP Adresse im Satelliten (1) erhält; und/oder
- Moduldaten (DA, DA'), welche von einem oder mehreren Modulen (4, 5) des Satelliten (1) stammen, von dem Funkterminal (7) an das Bodenterminal (2) übermittelt werden, wobei das Funkterminal (7) die Moduldaten (DA, DA') über Funk an das weltraumgestützte Internet-System (3) aussendet.

2. Verfahren nach Anspruch 1, **dadurch gekennzeichnet, dass** Steuerkommandos (CO) für zumindest eine Nutzlast (4) des Satelliten (1) von dem Bodenterminal (2) an das Funkterminal (7) übermittelt werden und/oder dass Moduldaten (DA), welche von zumindest einer Nutzlast (4) des Satelliten (1) stammen, von dem Funkterminal (7) an das Bodenterminal (2) übermittelt werden.

3. Verfahren nach einem der vorhergehenden Ansprüche, **dadurch gekennzeichnet, dass** Steuerkommandos (CO') für die Plattform (5) des Satelliten (1) von dem Bodenterminal (2) an das Funkterminal (7) übermittelt werden und/oder dass Moduldaten (DA'), welche von der Plattform (5) des Satelliten (1) stammen, von dem Funkterminal (7) an das Bodenterminal (2) übermittelt werden.

4. Verfahren nach Anspruch 3, **dadurch gekennzeichnet, dass** das Funkterminal (7) die Steuerkommandos (CO') für die Plattform (5) an einen zentralen Rechner (6) zur Plattformsteuerung weiterleitet und/oder dass das Funkterminal (7) die Moduldaten (DA'), welche von der Plattform (5) des Satelliten (1) stammen, von dem zentralen Rechner (6) zur Plattformsteuerung empfängt und anschließend über Funk aussendet.

5. Verfahren nach einem der vorhergehenden Ansprüche, **dadurch gekennzeichnet, dass** die Moduldaten (DA, DA') Betriebsdaten und/oder Messdaten des oder der Module (4, 5) des Satelliten (1) sind.

6. Verfahren nach einem der vorhergehenden Ansprüche, **dadurch gekennzeichnet, dass** in dem Bodenterminal (2) eine Benutzerschnittstelle (201) bereitgestellt wird, über die ein Benutzer die Übermittlung der Steuerkommandos (CO, CO') und/oder die Übermittlung der Moduldaten (DA, DA') veranlassen kann.

7. Verfahren nach einem der vorhergehenden Ansprüche, **dadurch gekennzeichnet, dass** die Benutzerschnittstelle (201) einen Webbrowser umfasst, über den das Funkterminal (7) des Satelliten (1) adressierbar ist.

8. Verfahren nach einem der vorhergehenden Ansprüche, **dadurch gekennzeichnet, dass** im Falle einer Unterbrechung der Kommunikation zwischen Funkterminal (7) und Bodenterminal (2) zu übermittelnde Steuerkommandos (CO, CO') im Bodenterminal (2) gepuffert werden und/oder zu übermittelnde Moduldaten (DA, DA') im Satelliten (1) gepuffert werden, wobei die gepufferten Steuerkommandos (CO, CO') und/oder Moduldaten (DA, DA') nach Beendigung der Unterbrechung ausgesendet werden.

9. Verfahren nach einem der vorhergehenden Ansprüche, **dadurch gekennzeichnet, dass** die Kommunikation zwischen Bodenterminal (2) und Satellit (1) verschlüsselt wird.

10. Verfahren nach einem der vorhergehenden Ansprüche, **dadurch gekennzeichnet, dass** der Satellit (1) eine Flughöhe hat, die zwischen 350 km und 15000 km, vorzugsweise zwischen 350 km und 1500 km und besonders bevorzugt zwischen 500 km und 1000 km oberhalb der Erdoberfläche liegt.

11. Satellit zur Verwendung in einem Verfahren nach einem der vorhergehenden Ansprüche, wobei der Satellit (1) ein Funkterminal (7) umfasst, das zur IP-basierten Kommunikation eingerichtet ist und dazu konfiguriert ist, über ein oder mehrere IP-basierte Protokolle:
- Steuerkommandos (CO, CO') für ein oder mehrere Module (4, 5) des Satelliten (1), die von einem Bodenterminal (2) stammen, über Funk von einem weltraumgestützten Internet-System (3) zu empfangen und an das oder die Module (4, 5) weiterzuleiten, wobei jedes angesteuerte Modul (4, 5) eine eigene IP Adresse im Satelliten (1) erhält; und/oder
- Moduldaten (DA, DA'), welche von einem oder mehreren Modulen (4, 5) des Satelliten (1) stammen und an das Bodenterminal (2) adressiert sind, über Funk an das weltraumgestützte Internet-System (3) auszusenden.

12. Funkterminal für einen Satelliten zur Verwendung in einem Verfahren nach einem der Ansprüche 1 bis 10, wobei das Funkterminal (7) zur IP-basierten Kommunikation eingerichtet ist und dazu konfiguriert ist, über ein oder mehrere IP-basierte Protokolle:
- Steuerkommandos (CO, CO') für ein oder mehrere Module (4, 5) des Satelliten (1), die von einem Bodenterminal (2) stammen, über Funk von einem weltraumgestützten Internet-System (3) zu empfangen und an das oder die Module (4, 5) weiterzuleiten, wobei jedes angesteuerte Modul (4, 5) eine eigene IP Adresse im Satelliten (1) erhält; und/oder
- Moduldaten (DA, DA'), welche von einem oder mehreren Modulen (4, 5) des Satelliten (1) stammen und an das Bodenterminal (2) adressiert sind, über Funk an das weltraumgestützte Internet-System (3) auszusenden.

## Claims

1. Method for communication between a ground terminal (2) on the earth's surface and a satellite (1), wherein the ground terminal (2) and a radio terminal (7) of the satellite (1) are set up for IP-based communication and the communication proceeds such that, via one or more IP-based protocols, with the interposition of a space-based Internet system (3):
- control commands (CO, CO') for one or more modules (4, 5) of the satellite (1) are transmitted from the ground terminal (2) to the radio terminal (7), which receives the control commands (CO, CO') by radio from the space-based Internet system (3) and forwards them to the module or modules (4, 5); and/or
- module data (DA, DA') coming from one or more modules (4, 5) of the satellite (1) are transmitted from the radio terminal (7) to the ground terminal (2), wherein the radio terminal (7) transmits the module data (DA, DA') by radio to the space-based Internet system (3).

2. Method according to claim 1, **characterized in that** control commands (CO) for at least one payload (4) of the satellite (1) are transmitted from the ground terminal (2) to the radio terminal (7), and/or that module data (DA) coming from at least one payload (4) of the satellite (1) are transmitted from the radio terminal (7) to the ground terminal (2).

3. Method according to any one of the preceding claims, **characterized in that** control commands (CO') for the platform (5) of the satellite (1) are transmitted from the ground terminal (2) to the radio terminal (7), and/or that module data (DA') coming from the platform (5) of the satellite (1) are transmitted from the radio terminal (7) to the ground terminal (2).

4. Method according to claim 3, **characterized in that** the radio terminal (7) forwards the control commands (CO') for the platform (5) to a central computer (6) for platform control, and/or that the radio terminal (7) receives the module data (DA'), coming from the platform (5) of the satellite (1), from the central computer (6) for platform control and then transmits them by radio.

5. Method according to any one of the preceding claims, **characterized in that** the module data (DA, DA') are operating data and/or measured data of the module or modules (4, 5) of the satellite (1).

6. Method according to any one of the preceding claims, **characterized in that** there is provided in the ground terminal (2) a user interface (201) via which a user can effect the transmission of the control commands (CO, CO') and/or the transmission of the module data (DA, DA').

7. Method according to any one of the preceding claims, **characterized in that** the user interface (201) comprises a web browser via which the radio terminal (7) of the satellite (1) is addressable.

8. Method according to any one of the preceding claims, **characterized in that**, in the event of an interruption in the communication between the radio terminal (7) and the ground terminal (2), control commands (CO, CO') for transmission are buffered in the ground terminal (2) and/or module data (DA, DA') for transmission are buffered in the satellite (1), wherein the buffered control commands (CO, CO') and/or module data (DA, DA') are transmitted after the interruption has ended.

9. Method according to any one of the preceding claims, **characterized in that** the communication between the ground terminal (2) and the satellite (1) is encrypted.

10. Method according to any one of the preceding claims, **characterized in that** the satellite (1) has a flying altitude between 350 km and 15,000 km, preferably between 350 km and 1500 km, and particularly preferably between 500 km and 1000 km, above the earth's surface.

11. Satellite for use in a method according to any one of the preceding claims, wherein the satellite (1) comprises a radio terminal (7) which is set up for IP-based communication and is configured, via one or more IP-based protocols:
- to receive by radio from a space-based Internet system (3) control commands (CO, CO') for one or more modules (4, 5) of the satellite (1) coming from a ground terminal (2) and to forward those commands to the module or modules (4, 5), wherein each controlled module (4, 5) obtains a unique IP address in the satellite (1); and/or
- to transmit by radio to the space-based Internet system (3) module data (DA, DA') coming from one or more modules (4, 5) of the satellite (1) and addressed to the ground terminal (2).

12. Radio terminal for a satellite for use in a method according to any one of claims 1 to 10, wherein the radio terminal (7) is set up for IP-based communication and is configured, via one or more IP-based protocols:
- to receive by radio from a space-based Internet system (3) control commands (CO, CO') for one or more modules (4, 5) of the satellite (1) coming from a ground terminal (2) and to forward those commands to the module or modules (4, 5), wherein each controlled module (4, 5) obtains a unique IP address in the satellite (1); and/or
- to transmit by radio to the space-based Internet system (3) module data (DA, DA') coming from one or more modules (4, 5) of the satellite (1) and addressed to the ground terminal (2).

## Revendications

1. Procédé de communication entre un terminal terrestre (2) à la surface de la terre et un satellite (1), dans lequel le terminal terrestre (2) ainsi qu'un terminal radio (7) du satellite (1) sont aménagés pour une communication basée sur IP et la communication se déroule de telle sorte que par l'intermédiaire d'un ou de plusieurs protocoles IP avec interposition d'un système internet spatial (3) :
- des instructions de commande (CO, CO') pour un ou plusieurs modules (4, 5) du satellite (1) sont transmises du terminal terrestre (2) au terminal radio (7) qui reçoit les instructions de commande (CO, CO') par radio du système internet spatial (3) et les retransmet audit module ou auxdits modules (4, 5), chaque module commandé (4, 5) recevant sa propre adresse IP sur le satellite (1) ; et/ou
- des données de module (DA, DA') provenant d'un ou de plusieurs modules (4, 5) du satellite (1) sont transmises du terminal radio (7) au terminal terrestre (2), le terminal radio (7) émettant les données de module (DA, DA') au système internet spatial (3) par radio.

2. Procédé selon la revendication 1, **caractérisé en ce que** les instructions de commande (CO) pour au moins une charge utile (4) du satellite (1) sont transmises du terminal terrestre (2) au terminal radio (7) et/ou **en ce que** des données de module (DA) provenant d'au moins une charge utile (4) du satellite (1) sont transmises du terminal radio (7) au terminal terrestre (2).

3. Procédé selon l'une quelconque des revendications précédentes, **caractérisé en ce que** des instructions de commande (CO') pour la plate-forme (5) du satellite (1) sont transmises du terminal terrestre (2) au terminal radio (7) et/ou **en ce que** des données de module (DA') provenant de la plate-forme (5) du satellite (1) sont transmises du terminal radio (7) au terminal terrestre (2).

4. Procédé selon la revendication 3, **caractérisé en ce que** le terminal radio (7) retransmet les instructions de commande (CO') pour la plate-forme (5) à un ordinateur central (6) pour commander la plate-forme et/ou **en ce que** le terminal radio (7) reçoit de l'ordinateur central les données de module (DA') provenant de la plate-forme (5) du satellite (1) et les émet ensuite par radio.

5. Procédé selon l'une quelconque des revendications précédentes, **caractérisé en ce que** les données de module (DA, DA') sont des données opérationnelles et/ou des données de mesure du module ou des modules (4, 5) du satellite (1).

6. Procédé selon l'une quelconque des revendications précédentes, **caractérisé en ce que** sur le terminal terrestre (2) est fournie une interface utilisateur (201) par laquelle un utilisateur peut ordonner la transmission des instructions de commande (CO, CO') et/ou la transmission des données de module (DA, DA').

7. Procédé selon l'une quelconque des revendications précédentes, **caractérisé en ce que** l'interface utilisateur (201) comprend un navigateur web permettant d'adresser le terminal radio (7) du satellite (1).

8. Procédé selon l'une quelconque des revendications précédentes, **caractérisé en ce qu'**en cas d'interruption de la communication, des instructions de commande (CO, CO') à transmettre entre le terminal radio (7) et le terminal terrestre (2) sont mises en mémoire tampon sur le terminal terrestre (2) et/ou des données de module (DA, DA') à transmettre sont mises en mémoire tampon sur le satellite (1), les instructions de commande (CO, CO') et/ou les données de module (DA, DA') mises en mémoire tampon étant émises après la fin de l'interruption.

9. Procédé selon l'une quelconque des revendications précédentes, **caractérisé en ce que** la communication entre le terminal terrestre (2) et le satellite (1) est cryptée.

10. Procédé selon l'une quelconque des revendications précédentes, **caractérisé en ce que** le satellite (1) présente une altitude de vol comprise entre 350 km et 15000 km, de préférence entre 350 km et 1500 km et de plus grande préférence entre 500 km et 1000 km au-dessus de la surface de la terre.

11. Satellite à utiliser dans un procédé selon l'une quelconque des revendications précédentes, dans lequel le satellite (1) comprend un terminal radio (7) aménagé pour une communication basée sur IP et configuré pour, par l'intermédiaire d'un ou de plusieurs protocoles IP :
- recevoir par radio d'un système internet spatial (3) des instructions de commande (CO, CO') provenant d'un terminal terrestre (2) pour un ou plusieurs modules (4, 5) du satellite (1) et les retransmettre audit module ou auxdits modules (4, 5), chaque module commandé (4, 5) recevant sa propre adresse IP sur le satellite (1) ; et/ou
- émettre par radio au système internet spatial (3) des données de module (DA, DA') provenant d'un ou de plusieurs modules (4, 5) du satellite (1) et adressées au terminal terrestre (2).

12. Terminal radio pour un satellite à utiliser dans un procédé selon l'une quelconque des revendications 1 à 10, dans lequel le terminal radio (7) aménagé pour une communication basée sur IP et configuré pour, par l'intermédiaire d'un ou de plusieurs protocoles IP :
- recevoir par radio d'un système internet spatial (3) des instructions de commande (CO, CO') provenant d'un terminal terrestre (2) pour un ou plusieurs modules (4, 5) du satellite (1) et les retransmettre audit module ou auxdits modules (4, 5), chaque module commandé (4, 5) recevant sa propre adresse IP sur le satellite (1) ; et/ou
- émettre par radio au système internet spatial (3) des données de module (DA, DA') provenant d'un ou de plusieurs modules (4, 5) du satellite (1) et adressées au terminal terrestre (2).
